# EUROPÄISCHE PATENTSCHRIFT

(11) **EP 1 027 244 B1**
(45) Veröffentlichungstag und Bekanntmachung des Hinweises auf die Patenterteilung: **17.07.2002**
(21) Anmeldenummer: 98954305.3
(22) Anmeldetag: 30.09.1998
(51) Int. Cl.: B60T 13/72

(54) **ELEKTRONISCH STEUERBARER BREMSKRAFTVERSTÄRKER**
ELECTRONICALLY CONTROLLABLE BRAKE BOOSTER
SERVOFREIN A COMMANDE ELECTRONIQUE

(30) Priorität: 06.10.1997 DE 19744111
(43) Veröffentlichungstag der Anmeldung: 16.08.2000
(73) Patentinhaber: LUCAS INDUSTRIES PUBLIC LIMITED COMPANY, Solihull B90 4LA (GB)
(72) Erfinder: LINDEN, Christoph, D-56179 Vallendar (DE); GODLEWSKY, Gregor, D-56170 Bendorf (DE)
(74) Vertreter: Schmidt, Steffen J., Dipl.-Ing.
(86) Internationale Anmeldenummer: EP9806224
(87) Internationale Veröffentlichungsnummer: WO9917973

(56) Entgegenhaltungen:
- EP-A- 0 435 112
- EP-A- 0 706 924
- DE-A- 4 430 461
- DE-A- 19 527 493
- DE-A- 19 612 952

## Beschreibung

Die vorliegende Erfindung betrifft einen elektronisch steuerbarer Bremskraftverstärker. Insbesondere betrifft die vorliegende Erfindung einen elektronisch steuerbarer Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druck- und der Unterdruckkammer einstellbar ist, wobei die Steuerventilanordnung in Abhängigkeit von einem durch die elektromagnetischen Betätigungseinrichtung fließenden Strom eine Haltestellung, in der der Strom in einem Bereich zwischen einem höheren Wert und einem niedrigeren Wert liegt, ohne daß die Steuerventilanordnung die Haltestellung verläßt, eine ersten Druckänderungsstellung, in der der Strom größer als der höhere Wert ist und eine zweiten Druckänderungsstellung, in der der Strom niedriger als der niedrige Wert ist, einnimmt.

Aus der DE 195 27 493 A1 ist eine elektromagnetische Betätigungseinrichtung bekannt, die eine mit einem Steuerstrom beaufschlagbare Magnetspule und einen der Magnetspule zugeordneten Anker aufweist, der dazu eingerichtet ist, Bewegungen auszuführen, die von einem durch die Magnetspule fließenden Steuerstrom und einer den Anker in entgegengesetzte Richtungen vorspannenden Federanordnung abhängig sind.

Dabei ist eine Haltestellung als Stellgröße definiert, die der Anker bei einem Haltestrom durch die Magnetspule einnimmt. Dieser durch die Magnetspule fließende Haltestrom ist auf einen höheren Wert oder auf einen niedrigeren Wert veränderbar, ohne daß der Anker die Haltestellung verläßt.

Außerdem sind der höhere sowie der niedrigere Stromwert so bemessen, daß Störungseinflüsse auf die den Anker betätigenden Magnet- und Federkräfte den Anker nicht in eine von der Haltestellung unterschiedliche betätigte Stellung bringen.

Dazu wird der höhere Stromwert in der Weise bestimmt, daß eine mit der Position des Ankers in der Haltestellung in Beziehung stehende Größe bestimmt wird; der Steuerstrom um einen vorbestimmten Stromschritt solange schrittweise erhöht wird und der Steuerstrom an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der zweiten betätigten Stellung ändert.

Der niedrigere Stromwert wird in der Weise bestimmt, daß eine mit der Position des Ankers in der Haltestellung in Beziehung stehende Größe bestimmt wird; der Steuerstrom um einen vorbestimmten Stromschritt schrittweise solange verringert wird und der Steuerstrom an die Magnetspule der elektromagnetischen Betätigungseinrichtung als Stellgröße ausgegeben wird, bis sich die mit der Position des Ankers in der Haltestellung in Beziehung stehende Größe um einen vorherbestimmten Wert in Richtung der ersten betätigten Stellung ändert.

Außerdem ist aus diesem Dokument bekannt, daß die Steuerventilanordnung sicher in die Haltestellung bringbar ist, wenn für den Haltestrom der arithmetische Mittelwert der Ströme gewählt wird.

Allerdings ist das in der DE 195 27 493 A1 behandelte Lernen der Arbeitspunkte darauf beschränkt, daß die maßgebenden Ströme für die untere Grenze und für die obere Grenze bei jedem Fahrtantritt beim Einschalten der Zündung oder während der Fahrt in regelmäßigen Zeitabständen gelernt und abgespeichert werden. Bei einer Ansteuerung der Steuerventilanordnung werden die auf diese Weise gelernten Ströme zur Vorgabe der ersten Stellgröße verwendet, um ein ausreichendes Regelverhalten zu erzielen.

Allerdings wird dabei die an der beweglichen Wand des Bremskraftverstärkers wirkende Druckdifferenz, für die je nach Ansteuerwunsch unterschiedliche Werte eingestellt werden, quantitativ nicht berücksichtigt. Die an der beweglichen Wand eingestellte Druckdifferenz wirkt nämlich unmittelbar auch auf den Ventilkörper, den Ventilsitz sowie das Ventilelement, was auch zu einer Verschiebung der Ströme für die untere Grenze und für die obere Grenze führt.

Die Erfindung behandelt also die Problematik, die sich durch die Verlagerung der oberen und unteren Stromwerte ergibt, welche notwendig sind, um die Steuerventilanordnung in ihrer Haltestellung zu halten.

Die Aufgabe der vorliegenden Erfindung besteht darin, diesen Nachteil zu beheben, so daß das Regelverhalten weiter verbessert ist, um zur weiteren Verbesserung der Leistungsfähigkeit des elektronisch steuerbaren Bremskraftverstärkers Störeinflüsse beim Betrieb zu kompensieren.

Diese Aufgabe wird bei dem eingangs beschriebenen elektronisch steuerbaren Bremskraftverstärker dadurch gelöst, daß eine für den Ist-Druck-Verlauf in der Druckkammer charakteristische Größe erfaßt wird, der Ist-Druck-Verlauf auf Vorliegen periodischer Schwingungsanteile eines vorbestimmten Frequenzbandes mit einer vorbestimmten Mindest-Amplitude untersucht wird, und bei Vorliegen solcher periodischer Schwingungsanteile des vorbestimmten Frequenzbandes der Strom für die erste Druckänderungsstellung um einen vorherbestimmten Wert verringert, und der Strom für die zweite Druckänderungsstellung um einen vorherbestimmten Wert erhöht wird.

Dabei nutzt das erfindungsgemäße Verfahren den überraschenden Umstand, daß bei einem elektronisch steuerbaren Bremskraftverstärker bei falsch eingestellten Arbeitspunkten der Ströme für die erste und die zweite Druckänderungs-stellung eine für den jeweiligen Bremskraftverstärker typische Schwingfrequenz auftritt, die dem den im Bremszylin-der erzeugten Bremsdruck repräsentierenden Signal überlagert ist. Es versteht sich, daß die vorbestimmte Mindest-Amplitude nahe bei Null liegen kann. Allerdings kann die Störsicherheit über diesem Parameter eingestellt werden.

Diese Schwingung wird erkannt und in Abhängigkeit von deren Vorhandensein wird der Wert der Ströme für die erste und die zweite Druckänderungsstellung verändert.

In einer bevorzugten Ausführungsform der Erfindung wird die Verringerung des Stroms für die erste Druckänderungsstellung um einen vorherbestimmten Wert, und die Erhöhung des Stroms für die zweite Druckänderungsstellung um einen vorherbestimmten Wert nur für eine vorbestimmte Zeitdauer vorgenommen.

Eine vorbestimmte Zeitspanne nach dem Verringern bzw. Erhöhen des Stroms für die erste bzw. zweite Druck-änderungsstellung wird der Ist-Druck-Verlauf auf Vorliegen der periodischen Schwingungsanteile des vorbestimmten Frequenzbandes mit der vorbestimmten Mindest-Amplitude untersucht, und bei Vorliegen solcher periodischer Schwingungsanteile des vorbestimmten Frequenzbandes wird der für die Verringerung des Stroms für die erste Druckänderungsstellung vorherbestimmte Wert und der für die Erhöhung des Stroms für die zweite Druckänderungsstellung vorherbestimmte Wert jeweils vergrößert. Damit soll der Schwingungs-neigung des Bremskraftverstärkers entgegengewirkt werden.

Vorzugsweise erfolgt die Untersuchung des Ist-Druck-Verlaufes auf Vorliegen der periodischen Schwingungsanteile des vorbestimmten Frequenzbandes mit der vorbestimmten Mindest-Amplitu-de durch Bestimmen der zeitlichen Abstände zwischen charakteristischen Stellen des Ist-Druck-Verlaufes.

Dabei können die charakteristischen Stellen des Ist-Druck-Verlaufes Maxima, Minima, Nulldurchgänge, oder Kurvenabschnitte vergleichbarer Steigung sein.

Um vergleichbare charakteristische Stellen des Ist-Druck-Verlaufes besser zu finden und auswerten zu können, kann es hilfreich sein, Gleichanteile des den Ist-Druck-Verlauf wiedergebenden Signals herauszufiltern.

Anstelle der Analyse des Ist-Druck-Verlaufes im Zeitbereich kann auch eine Analyse im Frequenzbereich (Fourieranalyse etc.) vorgenommen werden.

In erster Linie ist die zur Verfügung stehende Rechnerleistung oder der investierbare Hardware-Aufwand im Verhältnis zur erforderlichen oder gewünschten Genauigkeit entscheidend dafür, auf welche Weise das Vorhandensein der periodischen Schwingungsanteile des vorbestimmten Frequenzbandes im Ist-Druck-Verlauf ermittelt wird.

In einer bevorzugten Ausführungsform der Erfindung ist die erste Druckänderungsstellung eine Druckaufbaustellung (der Steuerventilanordnung), und die zweite Druckänderungsstellung eine Druckaufbaustellung (der Steuerventilanordnung).

Das vorbestimmte Frequenzband liegt erfindungsgemäß zwischen 0 Hz und 25 Hz, vorzugsweise zwischen 5 Hz und 10 Hz, und besonders vorzugsweise um 7 Hz. In erster Linie hängt das vorbestimmte Frequenzband von der Bauart bzw. dem Bautyp des Bremskraftverstärkers (bewegte Massen, Volumen der Kammern etc.) ab.

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert.
- Fig. 1: zeigt schematisch eine Fahrzeugbremsanlage mit einem elektronisch steuerbaren Bremskraftverstärker.
- Fig. 2: zeigt schematisch ein Diagramm zur Erläuterung der Steuerkennlinie eines elektronisch steuerbaren Bremskraftverstärkers.
- Fig. 3: zeigt schematisch einen Regelkreis in dem ein Bremskraftverstärker in der erfindungsgemäßen Weise betrieben ist.
- Fig. 4a: bis 4c zeigen schematisch ein Flußdiagramm zur Erkennung der typischen Schwingfrequenz eines elektronisch steuerbaren Bremskraftverstärkers.
- Fig. 5a: und 5b zeigen ein Flußdiagramm zur Anpassung der Arbeitspunkte der Steuerkennlinie eines elektronisch steuerbaren Bremskraftverstärkers.
- Fig. 6: zeigt eine weitere Ausführungsform eines Regelkreises in dem ein Bremskraftverstärker in der erfindungsgemäßen Weise betrieben ist.
- Fig. 7: zeigt ein Flußdiagramm zur Bestimmung der Vorsteuergröße der in Fig. 6 gezeigten Ausführungsform des Regelkreises.

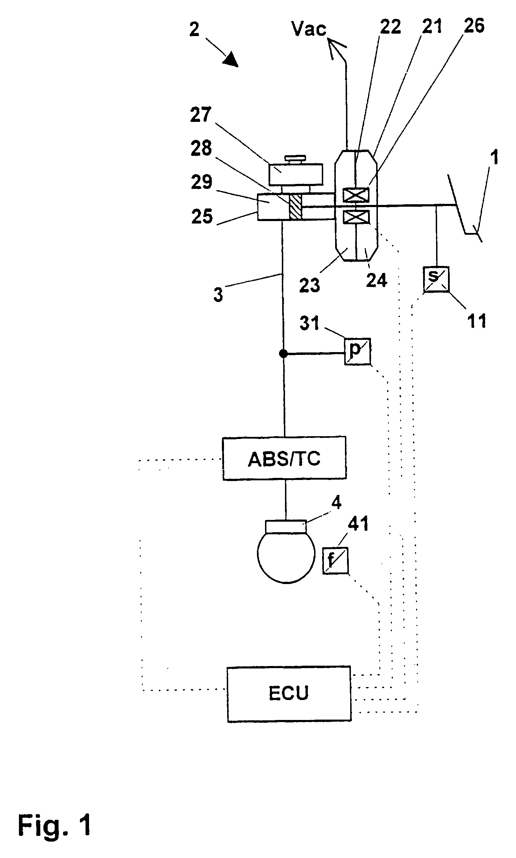

Bei der in Fig. 1 schematisch dargestellten Fahrzeugbremsanlage dient ein Bremspedal 1 dazu über ein Betätigungselement eine Bremsdruckgebereinheit 2 zu betätigen. Die Bremsdruckgebereinheit 2 weist einen Bremszylinder 25 auf, in dem ein Kolben 28 eine Druckkammer 29 bildet. Die Druckkammer 29 wird von einem Reservoir 27 mit Bremsfluid versorgt. Von der Druckkammer 29 führt eine Bremsleitung 3 zu einer Radbremse 4 des Fahrzeugs.

In der Bremsleitung 3 ist eine Antiblockier- und/oder Antriebsschlupfregeleinrichtung ABS/TC zwischen der Bremsdruckgebereinheit 2 und der Radbremse 4 angeordnet. Die Antiblokkier- und/oder Antriebsschlupfregeleinrichtung ABS/TC umfaßt in bekannter Weise unter anderem Ventil- und Pumpenanordnungen, die von einer elektronischen Steuereinheit ECU angesteuert werden, um den Druck in der Radbremse zu modulieren. Dies geschieht in Abhängigkeit des Drehverhaltens eines der Radbremse 4 zugeordneten Fahrzeugrades, das mittels eines Sensors 41 erfaßt und der elektronischen Steuereinheit ECU zugeführt wird.

Die Bremsdruckgebereinheit weist zur Verstärkung der vom Fahrer über das Bremspedal 1 eingeleiteten Betätigungskraft einen Bremskraftverstärker 21 auf. Eine bewegliche Wand 22 unterteilt den Bremskraftverstärker 21 in eine Unterdruckkammer 23 und eine Druckkammer 24. Zur Erzeugung des Unterdrucks ist die Unterdruckkammer 23 an eine nicht näher dargestellte Unterdruckquelle Vac angeschlossen. Bei einem mit einem Ottomotor ausgerüsteten Fahrzeug steht das im Ansaugrohr prinzipbedingt erzeugte Vakuum zur Verfügung. Dagegen ist bei einem mit einem Diesel- oder Elektromotor angetriebenen Fahrzeug eine zusätzliche Vakuumpumpe als Unterdruckquelle Vac notwendig. Bei einer Betätigung des Bremspedals 1 funktioniert der Bremskraftverstärker in bekannter Weise dadurch, daß die Druckkammer 24 mit Atmosphärendruck beaufschlagt wird, so daß an der beweglichen Wand 22 eine Druckdifferenz wirkt, die die am Bremspedal 1 eingeleitete Betätigungskraft unterstützt. Im unbetätigtem Zustand sind die Unterdruckkammer 23 und die Druckkammer 24 miteinander verbunden und somit druckausgeglichen, so daß an der beweglichen Wand 22 keine Druckdifferenz wirksam ist.

Der Bremskraftverstärker 21 ist über eine Elektromagnetanordnung 26 auch elektronisch steuerbar. Die elektronische Steuerbarkeit des Bremskraftverstärkers 21 ermöglicht es Bremsvorgänge auch automatisch, also unabhängig von einer Betätigung des Bremspedals 1 auszuführen. Dies kann zur Ausführung beispielsweise einer Antriebsschlupfregelung, Fahrdynamikregelung oder Abstandsregelung dienen. Eine Sensoreinrichtung 11 ist vorgesehen, um mit der Betätigung des Bremspedals 1 in Beziehung stehende Größen, wie beispielsweise Pedalweg, Pedalkraft oder Pedalbetätigungsgeschwindigkeit, zur Auswertung in der elektronischen Steuereinhei ECU zu erfassen, um auch Bremsungen in Notsituationen, wobei zum Beispiel die Überschreitung einer bestimmten Pedalbetätigungsgeschwindigkeit als Kriterium dient, auszuführen.

Dazu betätigt die Elektromagnetanordnung 26 ein hier nicht näher dargestelltes Steuerventil, um den Bremskraftverstärker 21 in unterschiedliche Steuerstellungen (I., II., III.) zu bringen:
- in eine erste sogenannte "Aufbaustellung" (I.), in der die Verbindung der Unterdruckkammer 23 mit der Druckkammer 24 gesperrt und die Verbindung der Druckkammer 24 zur Atmosphäre geöffnet ist, so daß an der beweglichen Wand 22 eine Druckdifferenz aufgebaut bzw. erhöht wird, oder
- in eine zweite sogenannte "Haltestellung" (II.), in der die Verbindung der Unterdruckkammer 23 mit der Druckkammer 24 und die Verbindung der Druckammer 24 zur Atmosphäre gesperrt ist, so daß eine an der beweglichen Wand 22 wirkende Druckdifferenz aufrechterhalten wird, oder
- in eine dritte sogenannte "Abbaustellung" (III.), in der die Verbindung der Unterdruckkammer 23 mit der Druckkammer 24 geöffnet und die Verbindung der Druckkammer 24 zur Atmosphäre gesperrt ist, so daß über einen Druckausgleichsvorgang eine an der beweglichen Wand 22 wirkende Druckdifferenz abgebaut wird.

Um das Steuerventil in die unterschiedlichen Steuerstellungen (I., II., III.) zu bringen, bestromt die elektronische Steuereinheit ECU die Elektromagnetanordnung 26 mit einem Steuerstrom I_{SOLL}, wobei die Variation des Steuerstroms I_{SOLL} beispielsweise durch Pulsweitenmodulation erfolgt. Dabei wird auf den Anker der Elektromagnetanordnung 42 eine Magnetkraft ausgeübt, die eine Positionierung des Ankers bewirkt, aus der sich dann die Steuerstellungen (I., II., III.) ergeben.

Der in der Druckkammer 29 des Bremszylinders 25 erzeugte und in die Bremsleitung 3 eingeleitete Bremsdruck P_{IST} wird mittels eines Sensors 31 erfaßt und an die elektronische Steuereinheit ECU weitergeleitet, um den Bremsdruck P_{IST} in Abhängigkeit von einem gewünschten Druckwert und/oder Druckverlauf P_{SOLL} durch Verstellen des die Elektromagnetanordnung 26 ansteuernden Spulenstromes I_{SOLL} zu regeln.

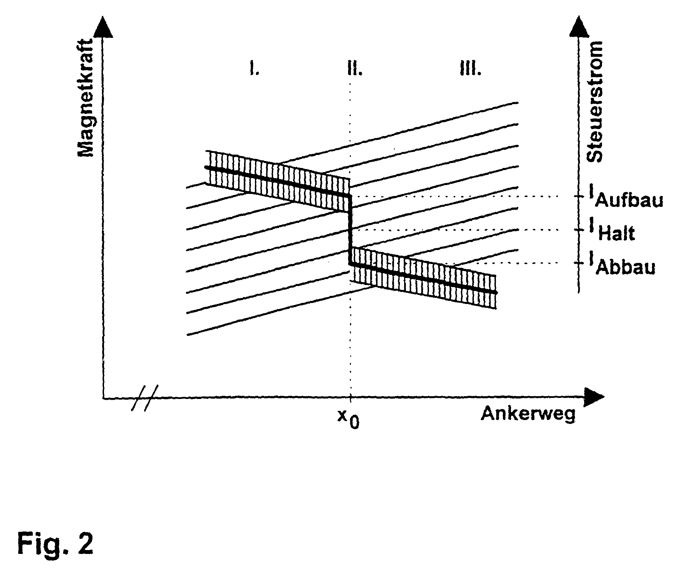

In dem Diagramm gemäß Fig. 2 ist auf der Abszisse der Ankerweg und auf der Ordinate die auf den Anker ausgeübte Magnetkraft aufgetragen, die sich in Abhängigkeit vom dem Steuerstrom I_{SOLL} ergibt. Hierbei handelt es sich um eine schematische Darstellung die sich auf einen Arbeitsbereich bezieht, der derart ausgelegt ist, daß ein proportionaler Zusammenhang zwischen Magnetkraft und Steuerstrom besteht. Weiterhin ist die Steuerkennlinie des elektronisch steuerbaren Bremskraftverstärkers eingetragen. Diese Steuerkennlinie weist insgesamt drei Zweige auf. Bei dem senkrechten Zweig ist einer bestimmten Ankerposition x₀ ein Strombereich I_{ABBAU} < I_{SOLL} < I_{AUFBAU} zugeordnet, wobei die Position xₒ genau der "Haltestellung" (II.) entspricht. Der sich nach links an den senkrechten Zweig anschließende geneigte Zweig gilt für einen Strom I_{SOLL} > I_{AUFBAU} und steht für die "Aufbaustellung (I.), während der von dem senkrechten Zweig nach rechts abgehende Zweig für einen Strom I_{SOLL} < I_{ABBAU} gilt und die "Abbaustellung" charakterisiert.

Bedingt durch Störeinflüsse, die beispielsweise durch Reibungsverluste, Toleranzen, Temperaturschwankungen oder Schwankungen externer Reaktionskräfte, wozu insbesondere Schwankungen des Druckkraftanteils in der Unterdruckkammer 23 des Bremskraftverstärkers 21 zählen, hervorgerufen werden, ist die Steuerkennlinie im Bereich der geneigten Zweige mit einem Streuband behaftet, was zur einer Verschiebung der Arbeitspunkte I_{ABBAU} und I_{AUFBAU} führt. Um diesem Problem in Bezug auf die "Haltestellung" (II.) entgegenzuwirken, wird vorzugsweise für I_{HALT} ein Strom eingestellt, der sich als arithmetischer Mittelwert der Ströme I_{AUFBAU} und I_{ABBAU} ergibt. Dies und insbesondere ein Verfahren zum Lernen der für den Arbeitspunkt maßgebenden Ströme I_{ABBAU} und I_{AUFBAU} ist in der DE 195 27 493 A1 beschrieben.

Allerdings beschränkt sich das in der DE 195 27 493 A1 behandelte Verfahren darauf, die Ströme I_{ABBAU} und I_{AUFBAU} bei jedem Fahrtantritt beim Einschalten der Zündung oder während der Fahrt in regelmäßigen Zeitabständen, allerdings wenn kein Ansteuerwunsch zum Betrieb des elektronisch steuerbarem Bremskraftverstärker vorliegt, zu lernen.

Das erfindungsgemäße Verfahren basiert demgegenüber auf der überraschenden Erkenntnis, daß bei einem elektronisch steuerbaren Bremskraftverstärker bei falsch eingestellten Arbeitspunkten I_{ABBAU} und I_{AUFBAU} eine typische Schwingfrequenz f_{TYP} auftritt, die in der Größenordnung von 7 Hz liegt und dem den im Bremszylinder 25 erzeugten Bremsdruck repräsentierenden Signal P_{IST} überlagert ist.

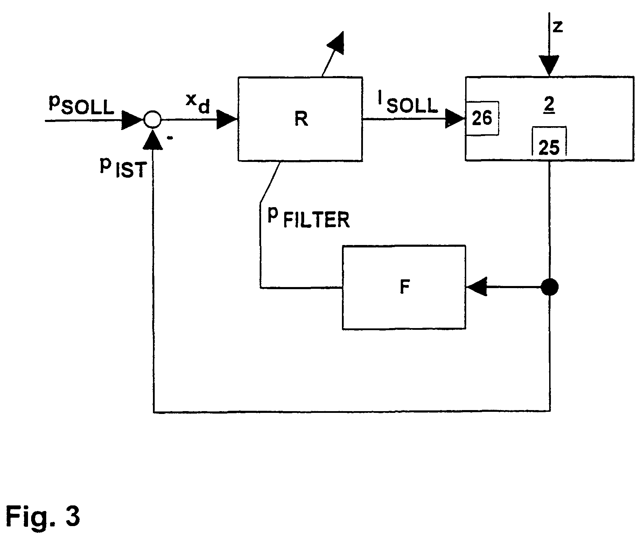

Üblicherweise erfolgt der Betrieb des elektronisch steuerbaren Bremskraftverstärkers 25 in einem geschlossenen Regelkreis, wie in Fig. 3 dargestellt. Dabei wird eine von der Regelstrecke - der Bremsdruckgebereinheit 2 - ausgehende Regelgröße - der im Bremszylinder 25 erzeugte Bremsdruck P_{IST} - fortlaufend erfaßt und mit einer Führungsgröße - dem gewünschten Druckverlauf P_{SOLL} - verglichen. Das Ergebnis dieses Vergleichs ist eine Regelabweichung x_{d}, die einer Regeleinrichtung R zugeführt wird. Die Stellgröße, die von der Regeleinrichtung R ausgeht, ist der der Elektromagnetanordnung 26 zugeführte Steuerstrom I_{SOLL}. Bei den Störgrößen z, die von außen auf die Bremsdruckgebereinheit 2 einwirken, handelt es sich vorwiegend um die bereits erwähnten durch Reibung, Toleranzen und Reaktionskräfte verursachten Einflüsse.

Zur Erkennung der typischen Schwingfrequenz f_{TYP} ist ein Bandpassfilter F vorgesehen, das eine Mittenfrequenz in Größenordnung der typischen Schwingfrequenz f_{TYP} aufweist. Dem Bandpassfilter F wird eingangsseitig das Signal P_{IST} zugeführt. Aufgrund der Bandpassfilterung ergibt sich ausgangsseitig ein periodisches (sinusähnliches) Signal P_{FILTER}, das gegenüber dem Signal P_{IST} keine Gleichanteile aufweist, und somit falls vorhanden genau die typische Schwingung repräsentiert. Falls keine typische Schwingung auftritt, also die Arbeitspunkte I_{ABBAU} und I_{AUFBAU} richtig eingestellt sind, ist das Signal P_{FILTER} (nahezu) gleich Null. Das Signal P_{FILTER} wird der Regeleinrichtung R zugeführt, um den Steuerstrom I_{SOLL} an die richtigen Arbeitspunkte I_{ABBAU} und I_{AUFBAU} anzupassen.

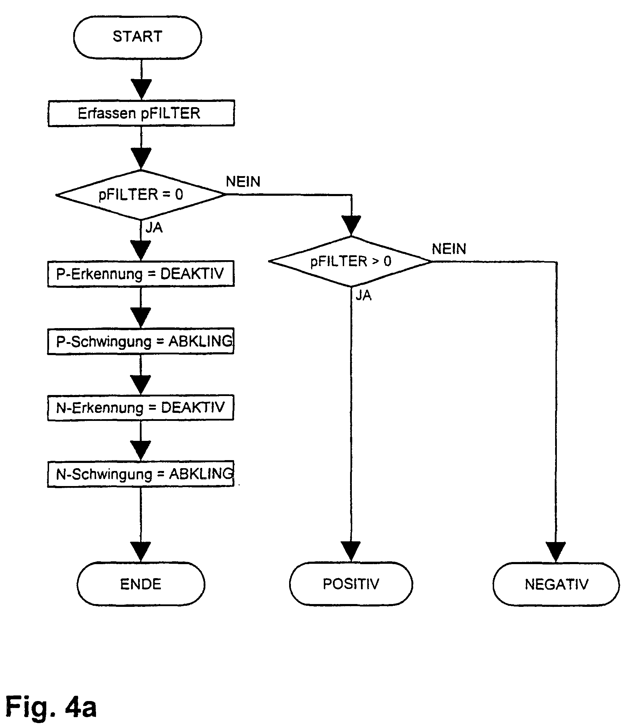

Zur Anpassung des Steuerstroms I_{SOLL} an die richtigen Arbeitspunkte I_{ABBAU} und I_{AUFBAU} wird zunächst eine Schwingungserkennung durchgeführt, die nachfolgend anhand des in Fig. 4a bis 4c dargestellten Flußdiagramms erläutert wird.

Der in Fig. 4a bis 4c dargestellte Ablauf wird zyklisch abgearbeitet. Bei jedem Zyklus wird der aktuelle Wert des Signals P_{FILTER} erfaßt. Liegt der Wert von P_{FILTER} in der Größenordnung von (nahezu) gleich Null, so ist keine Anpassung der Arbeitspunkte I_{ABBAU} und I_{AUFBAU} erforderlich, so daß keine Schwingungserkennung durchgeführt wird. Dabei wird eine Reinitialisierung der Zustände "P-Erkennung", "P-Schwingung", "N-Erkennung" sowie "N-Schwingung" vorgenommen, in der Weise das "P-Erkennung" sowie "N-Erkennung" auf deaktiv und "P-Schwingung" sowie "N-Schwingung" auf abklingend gesetz werden. Die Zustände "P-Erkennung" bzw. "N-Erkennung" zeigen an, ob eine Schwingungserkennung für die positive bzw. negative Halbwelle des Signals P_{FILTER} deaktiv oder aktiv ist, während "P-Schwingung" bzw. "N-Schwingung" anzeigen ob die positive bzw. negative Halbwelle von P_{FILTER} eine abklingende, aufklingende und gegebenenfalls gültige Schwingung ist.

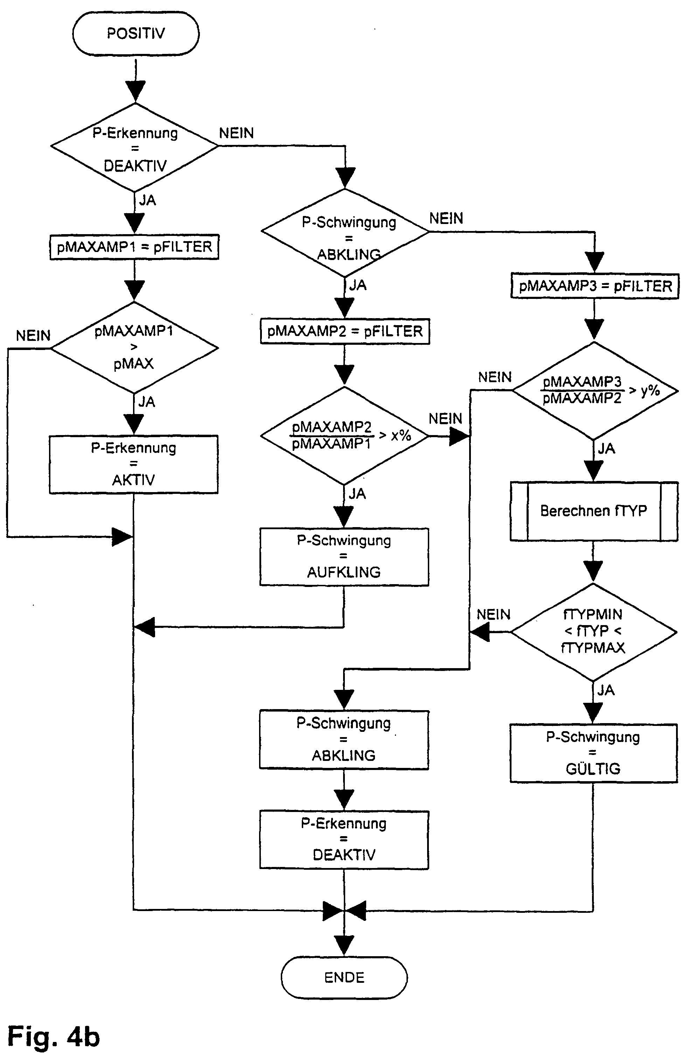

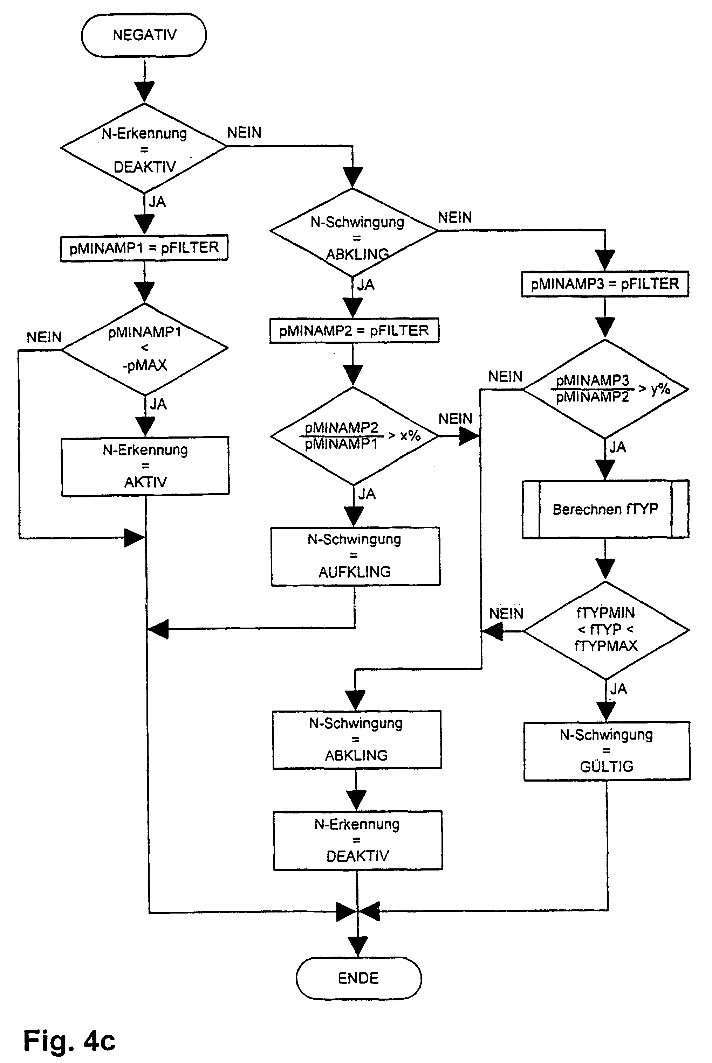

Liegt der Wert von P_{FILTER} außerhalb der Größenordnung von (nahezu) gleich Null, so wird unterschieden ob die positive oder negative Halbwelle von P_{FILTER} vorliegt. Im Fall der positiven Halbwelle wird mit dem in Fig. 4b, im Fall der negativen mit dem in Fig. 4c gezeigten Ablauf fortgefahren, wobei die Abläufe in Fig. 4b und 4c strukturell identisch sind.

Wie in Fig. 4b dargestellt wird nach dem ersten Erkennen einer positiven Halbwelle - der Zustand "P-Erkennung" ist zu diesem Zeitpunkt noch deaktiv - in einem ersten Schritt die erste maximale Amplitude P_{MAXAMP1} der positiven Halbwelle bestimmt. Anschließend wird die erste maximale Amplitude P_{MA-} _{XAMP1} mit einem vorbestimmten Schwellwert P_{MAX} verglichen. Liegt P_{MAXAMP1} unterhalb von P_{MAX}, so wird die Schwingungserkennung abgebrochen. Liegt P_{MAXAMP1} dagegen oberhalb von P_{MAX}, so wird der Zustand "P-Erkennung" auf aktiv gesetzt, um die Schwingungserkennung fortzusetzen.

In einem zweiten Schritt wird daraufhin - der Zustand "P-Erkennung" ist jetzt aktiv und der Zustand "P-Schwingung" ist noch abklingend - die zweite maximale Amplitude P_{MAXAMP2} der positiven Halbwelle bestimmt. Um festzustellen, ob es sich um eine aufklingende Schwingung handelt, wird das Verhältnis der zweiten maximalen Amplitude zu der ersten maximalen Amplitude P_{MAXAMP2} / P_{MAXAMP1} gebildet und mit einem vorbestimmten Verhältnis x_{%} verglichen. Ist das Verhältnis P_{MAXAMP2} / P_{MA-} _{XAMP1} kleiner als das vorbestimmte Verhältnis x_{%}, so wird die Schwingungserkennung abgebrochen und der Zustand "P-Erkennung" wieder deaktiviert. Ist dagegen das Verhältnis P_{MAXAMP2} / P_{MAXAMP1} größer als das vorbestimmte Verhältnis x_{%}, so wird der Zustand "P-Schwingung" auf aufklingend gesetzt und die Schwingungserkennung fortgesetzt.

In dem nun folgenden dritten Schritt - der Zustand "P-Erkennung ist aktiv und der Zustand "P-Schwingung" ist aufklingend - wird die dritte maximale Amplitude P_{MAXAMP3} der positiven Halbwelle bestimmt. Auch hierbei wird festgestellt, ob es sich um eine aufklingende Schwingung handelt, indem das Verhältnis der dritten maximalen Amplitude zu der zweiten maximalen Amplitude P_{MAXAMP3} / P_{MAXAMP2} gebildet und mit einem vorbestimmten Verhältnis y_{%} verglichen wird. Unterschreitet das Verhältnis P_{MAXAMP3} / P_{MAXAMP2} das vorbestimmte Verhältnis y_{%}, so wird auch hier die Schwingungserkennung abgebrochen, wobei der Zustand "P-Schwin-gung" auf abklingend und der Zustand "P-Erkennung" auf deaktiv zurückgesetzt wird. Liegt demgegenüber wieder eine aufklingende Schwingung vor, so erfolgt jetzt eine Berechnung der typischen Schwingfrequenz f_{TYP}.

Die Berechnung der typischen Schwingfrequenz f_{TYP} kann auf einfache Weise über die Zeitspanne, die zwischen der Erkennung der ersten, zweiten und/oder dritten maximalen Amplitude P_{MAXAMP1}, P_{MAXAMP2}, P_{MAXAMP3} auftritt und gleichfalls erfaßt wird, erfolgen. Alternativ kann die Bestimmung der typischen Schwingfrequen f_{TYP} beispielsweise auch mittels Verfahren wie der Whittaker'sche Signalrekonstruktion oder der Fast Fourier Transformation erfolgen, mit denen zwar eine verhältnismäßig hohe Genauigkeit erzielbar ist, die allerdings einen hohen Rechenaufwand erfordern, so daß sich bei Implementierung auf dem Prozeßrechner der elektronischen Steuereinheit ECU eine sehr hohe Systembelastung ergibt.

Nach Berechnung der typischen Schwingfrequenz wird überprüft, ob der für f_{TYP} berechnete Wert innerhalb eines vorbestimmten Frequenzbereichs liegt: f_{TYPMIN} < f_{TYP} < f_{TYPMAX}. Wenn der für f_{TYP} berechnete Wert außerhalb des durch f_{TYPMIN}, f_{TYPMAX} vorbestimmten Frequenzbereichs liegt, wird die Schwingungserkennung abgebrochen, wobei der Zustand "P-Schwingung" auf abklingend und der Zustand "P-Erkennung" auf deaktiv zurückgesetzt wird. Liegt der für f_{TYP} berechnete Wert innerhalb des durch f_{TYPMIN}, f_{TYPMAX} vorbestimmten Frequenzbereichs, so gilt die Schwingungserkennung für die positive Halbwelle als erfolgreich abgeschlossen, wozu der Zustand "P-Schwingung" auf gültig gesetzt wird.

Der in Fig. 4c dargestellte Ablauf der Schwingungserkennung für die negative Halbwelle von P_{FILTER} ist prinzipiell identisch und von daher selbsterklärend. Dabei werden entsprechend der Zustände "P-Erkennung" und "P-Schwingung" die Zustände "N-Erkennung" und "N-Schwingung" gesetzt bzw. abgefragt, sowie entsprechend der ersten bis dritten maximalen Amplituden p_{MAXAMP1}, p_{MAXAMP2}, p_{MAXAMP3} die ersten bis dritten minimalen Amplituden P_{MINAMP1}, P_{MINAMP2}, P_{MINAMP3} bestimmt. Entsprechend wird bei erfolgreichem Abschluss der Schwingungserkennung für die negative Halbwelle der Zustand "N-Schwingung" auf gültig gesetzt.

Bei dem anhand von Fig. 4a bis 4c erläuterten Ausführungsbeispiel zur Schwingungserkennung werden für die positive bzw. negative Halbwelle jeweils die ersten drei maximalen bzw. minimalen Amplituden bestimmt, was sich in der Praxis bewährt hat. Grundsätzlich lässt sich die Schwingungerkennung mit jeder beliebigen Anzahl - mindestens jedoch zwei - maximaler bzw. minimaler Amplituden durchführen. Bei Bestimmung einer grösseren Anzahl maximaler bzw. minimaler Amplituden lässt sich einerseits zwar eine höhere Genauigkeit, vor allem bei Berechnung der typischen Schwingfrequenz, erzielen, andererseits verlängert sich aber auch die Zeitdauer bis zur Erkennung einer gültigen Schwingung.

In diesem Zusammenhang sei auch erwähnt, das die Zeitdauer von der Aktivierung einer Schwingungserkennung bis zur Erkennung einer gültigen Schwingung in jedem Fall auf eine vorbestimmte Zeitdauer begrenzt ist. Wird diese Zeitdauer überschritten, was beispielsweise während der Bestimmung der maximalen bzw. minimalen Amplituden eintreten kann, so wird die Schwingungserkennung abgebrochen.

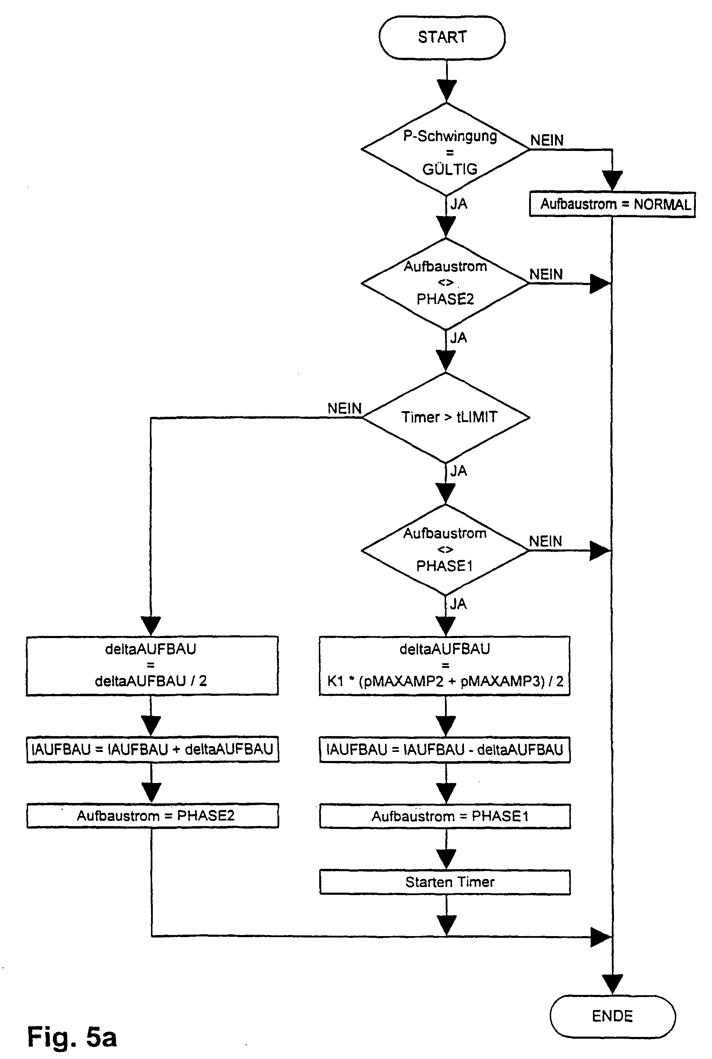

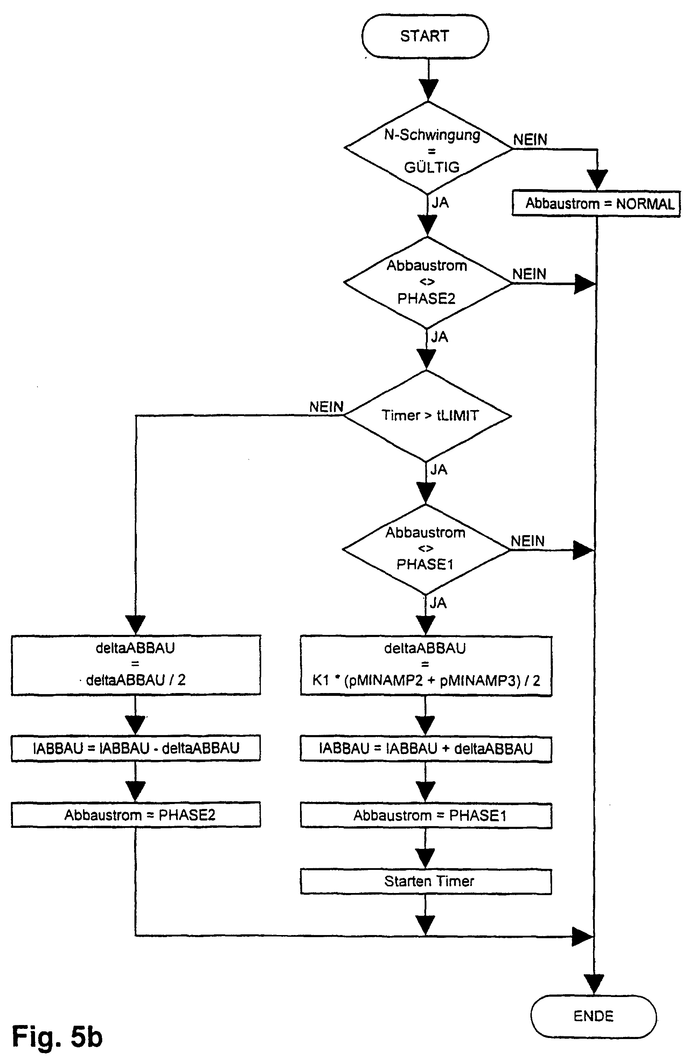

Die Einstellung des Arbeitspunktes I_{AUFBAU} ist in dem Flussdiagramm gemäß Fig. 5a, die Einstellung des Arbeitspunktes I_{ABBAU} in dem Flussdiagramm gemäß Fig. 5b dargestellt. Die Abläufe in Fig. 5a und 5b sind strukturell identisch und werden zyklisch abgearbeitet.

Wie in Fig. 5a dargestellt erfolgt eine Einstellung des Arbeitspunktes I_{AUFBAU} nur dann, wenn zuvor eine gültige Schwingung erkannt wurde. Hierzu wird der Zustand "P-Schwingung" auf gültig abgefragt. Ist der Zustand "P-Schwingung" nicht gültig, so erfolgt keine Einstellung des Arbeitspunktes I_{AUFBAU}, wobei der Zustand "Aufbaustrom" auf den Initialisierungswert normal zurückgesetzt wird. Dies bedeutet, daß der zuletzt eingestellte Arbeitspunkt I_{AUFBAU} beibehalten wird. Bezüglich der ersten Einstellung des Arbeitspunktes I_{AUFBAU}, insbesondere bei Einschalten der Zündung bei Fahrtantritt, sei nochmals auf das Lernverfahren gemäß der DE 195 27 493 A1 verwiesen.

Wenn der Zustand "P-Schwingung" gültig ist, so wird - der Zustand "Aufbaustrom" ist normal und der Timer ist noch nicht gestartet - ein Korrekturwert delta_{AUFBAU} berechnet, der sich ergibt aus dem arithmetischen Mittelwert der beiden zuletzt bestimmten maximalen Amplituden P_{MAXAMP2}, P_{MAXAMP3}, multipliziert mit einem Gewichtungsfaktor K₁. Dann wir der Arbeitspunkt I_{AUFBAU} um den Korrekturwert delta_{AUFBAU} reduziert und es wird der Zustand "Aufbaustrom" auf die erste Phase (PHASE1) gesetzt, sowie der Timer gestartet. Da der Zustand "Aufbaustrom" auf die erste Phase (PHASE1) gesetzt wurde, wird, solange der Timer das vorbestimmte Zeitlimit t_{LIMIT} nicht erreicht, der Arbeitspunkt I_{AUFBAU} unverändert beibehalten; anders ausgedrückt wird also der Arbeitspunkt I_{AUFBAU} für die durch t_{LIMIT} vorbestimmte Zeitdauer konstant gehalten. Hat der Timer das vorbestimmte Zeitlimit t_{LIMIT} erreicht, wird der zuvor berechnete Korrekturwert delta_{AUFBAU} auf die Hälfte reduziert, und der Arbeitspunkt I_{AUFBAU} wird um diesen reduzierten Korrekturwert delta_{AUFBAU} erhöht. Dabei wird der Zustand "Aufbaustrom" auf die zweite Phase (PHASE2) gesetzt, so daß nachfolgend keine Veränderung des Arbeitspunktes I_{AUFBAU} vorgenommen wird, jedenfalls solange nicht, bis eine neue gültige Schwingung erkannt wird, die dann eine neue Arbeitspunkteinstellung auslöst.

Der in Fig. 5b gezeigte Ablauf für die Einstellung des Arbeitspunktes I_{ABBAU} ist prinzipiell identisch und von daher selbsterklärend. Hierbei werden entsprechend des Zustands "P-schwingung" der Zustand "N-Schwingung" abgefragt, und entsprechend des Zustands "Aufbaustrom" der Zustand "Abbaustrom" gesetzt bzw. abgefragt. Der Korrekturwert delta_{ABBAU} wird hier in Abhängigkeit der beiden zuletzt bestimmten minimalen Amplituden P_{MINAMP2}, P_{MINAMP3}, bestimmt und mit einem Faktor K₂ gewichtet. Während der ersten Phase (PHASE1) wird der Arbeitspunkt I_{ABBAU} für die vorbestimmte Zeitdauer t_{LIMIT} erhöht um den Korrekturwert delta_{ABBAU}, und dann für die zweite Phase (PHASE2) wieder reduziert um den reduzierten Korrekturwert delta_{ABBAU}.

Auch das anhand von Fig. 5a und 5b erläuterte Ausführungsbeispiel zur Einstellung der Arbeitspunkte I_{AUFBAU} und I_{ABBAU} hat sich in der Praxis bewährt. Demnach werden die Arbeitspunkte I_{AUFBAU} bzw. I_{ABBAU} zunächst erniedrigt bzw. erhöht, um nach einer über t_{LIMIT} vorbestimmten Zeitdauer, nach deren Ablauf davon auszugehen ist, daß sich das System ruhiger verhält, die Arbeitspunkte I_{AUFBAU} bzw. I_{ABBAU} wieder zu erhöhen bzw. zu erniedrigen. Die Bestimmung des dabei zugrundegelegten Korrekturwertes delta_{AUFBAU} bzw. delta_{ABBAU} kann auch - sofern zuvor bestimmt - über mehrere maximale bzw. minimale Amplituden erfolgen. Ebenso ist die spätere Reduzierung der Korrekturwerte nicht unbedingt auf eine Division durch zwei, wie hier beschrieben, beschränkt.

Die in Fig. 4a bis 4c erläuterte Schwingungserkennung und die in Fig. 5a und 5b erläuterte Korrektur der Arbeitspunkte, werden ständig durchlaufen, wobei die Schnittstelle zwischen den beiden Verfahrensteilen über die Zustände "P-Schwingung" bzw. "N-Schwingung" sowie Übergabe der aus dem Signal P_{FILTER} bestimmten maximalen bzw. minimalen Amplituden. Bezeichnend für das erfindungsgemäße Verfahren ist dabei auch, daß bei einer als gültig erkannten Schwingung im Bereich der positiven Halbwelle des Signals P_{FILTER} nur eine Korrektur des Arbeitspunktes I_{AUFBAU} und bei einer als gültig erkannten Schwingung im Bereich der negativen Halbwelle des Signals P_{FILTER} nur eine Korrektur des Arbeitspunktes I_{ABBAU} erfolgt. Wird eine Schwingung sowohl im Bereich der positiven Halbwelle des Signals P_{FILTER} als auch im Bereich der negativen Halbwelle des Signals P_{FILTER} als gültig erkannt, so werden beide Arbeitspunkte I_{AUFBAU} und I_{ABBAU} korrigiert.

Die eigentliche Anpassung des Steuerstroms I_{SOLL} an die mittels des erfindungsgemäßen Verfahrens eingestellten Arbeitspunkte I_{AUFBAU} und I_{ABBAU}, sowie ein dabei zur Anwendung kommender Regelalgorithmus, ist in der bereits genannten DE 195 27 493 A1 beschrieben.

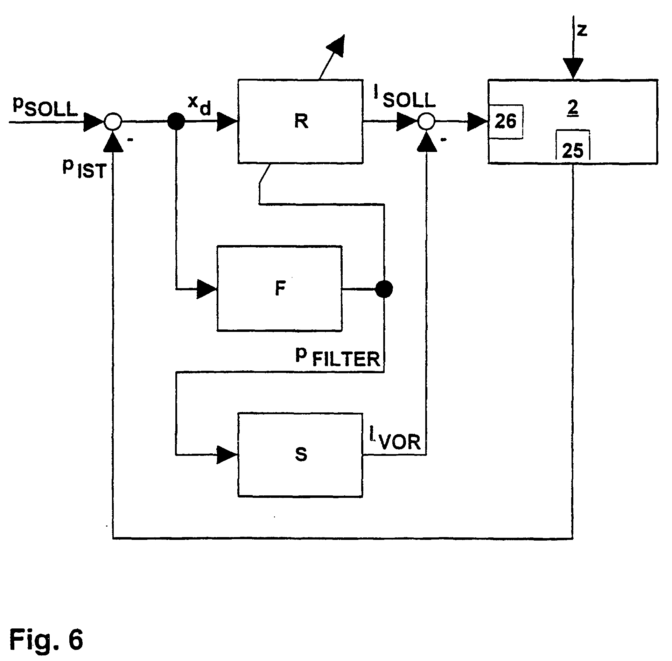

Der in Fig. 6 dargestellte geschlossene Regelkreis ist gegenüber Fig. 3 um einen Vorsteuerregler S erweitert. Dem Vorsteuerregler S wird eingangsseitig das durch den Bandpass F gefilterte Signal P_{FILTER} zugeführt, wobei ausgangsseitig eine Vorsteuergröße I_{VOR} bereitgestellt wird, die der Stellgröße I_{SOLL} gegengekoppelt wird.

Alternativ wird hierbei dem Bandpassfilter F eingangsseitig die Regelabweichung xD zugeführt, um das für den Bremskraftverstärker typische Schwingungssignal P_{FILTER} auszufiltern. Da sich die Regelabweichung x_{D} durch Subtraktion der Regelgröße P_{IST} von der Führungsgröße P_{SOLL} ergibt, und die Führungsgröße P_{SOLL} ein Gleichsignal ist, ist die typische Schwingung auch dem Signal der Regelabweichung x_{D} überlagert.

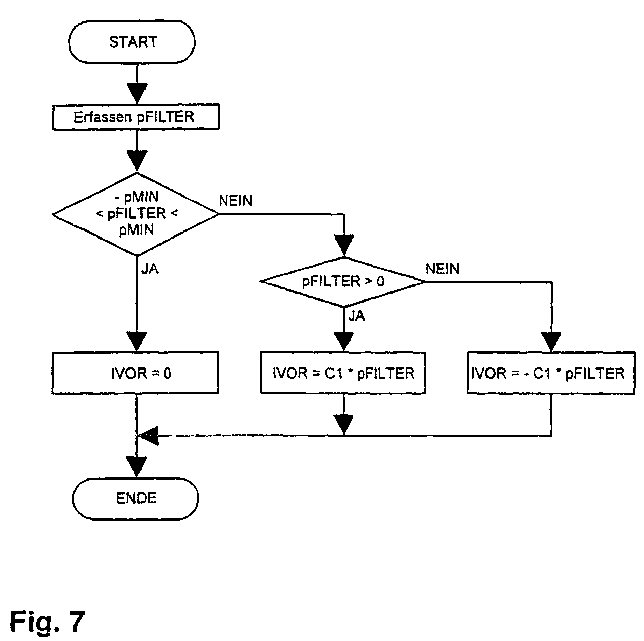

Aus dem in Fig. 7 gezeigten Flußdiagramm, das zyklisch durchlaufen wird, geht hervor, wie die Vorsteuergröße I_{VOR} in Abhängigkeit von dem Signal P_{FILTER} eingestellt wird. Demnach ergibt sich die Vorsteuergröße I_{VOR}, indem die positiven Anteile des Signals P_{FILTER} mit einem positiven Faktor C₁ gewichtet und die negativen Anteile des Signals P_{FILTER} mit einem negativen Faktor C₂ gewichtet werden. Dies bedeutet, da, wie in Fig. 6 gezeigt, die Vorsteuergröße I_{VOR} von der der Regelstrecke (Bremsdruckgebereinheit 2 bzw. Elektromagnetanordnung 26) zugeführten Stellgröße I_{SOLL} subtrahiert wird, daß im Fall positiver Anteile des Signals P_{FILTER} die Stellgröße I_{SOLL} reduziert und im Fall negativer Anteile des Signals P_{FILTER} die Stellgröße I_{SOLL} erhöht wird.

Durch die Beaufschlagung der Stellgröße I_{SOLL} mit der Vorsteuergröße I_{VOR} erfolgt vorzeitig - bereits während der Schwingungserkennung - ein aktive Korrektur der Stellgröße I_{SOLL}, was zu einer weiteren Verbesserung des Regelverhaltens führt. So wird anhand der positiven bzw. negativen Anteile des Signals P_{FILTER} die Tendenz zu einem zu steilen Anstieg (Überschwingen) bzw. Abfall (Unterschwingen) der Regelgröße P_{IST} vorzeitig erkannt, so daß dem in der dargelegten Weise (bedämpfend) entgegengewirkt werden kann. Auch werden durch diese Maßnahme kleinere Arbeitspunktverschiebungen kompensiert, die insbesondere durch vakuumbedingte Druckschwankungen in der Unterdruckkammer 23 des Bremskraftverstärkers 21 verursacht werden.

Um das Ansprechverhalten des Vorsteuerreglers S einstellen zu können, kann, wie aus Fig. 7 hervorgeht, vorgesehen werden, daß eine Vorgabe der Vorsteuergröße I_{VOR} nur dann erfolgt, wenn das Signal P_{FILTER} außerhalb eines durch einen Schwellwert P_{MIN} vorbestimmten Ansprechbereichs liegt: -P_{MIN} < P_{FIL-} TER < P_{MIN}. Liegt das Signal P_{FILTER} innerhalb diese Ansprechbereiches, so wird die Vorsteuergröße I_{VOR} auf den Wert Null gesetzt, so daß keine Beeinflussung der Stellgröße I_{SOLL} erfolgt.

## Patentansprüche

1. Elektronisch steuerbarer Bremskraftverstärker mit
- einer Unterdruckkammer und einer Druckkammer, die durch eine bewegliche Wand voneinander getrennt sind,
- einer Steuerventilanordnung (6, 7, 9), die mittels einer elektromagnetischen Betätigungseinrichtung (3, 4) betätigbar ist, und durch die eine Druckdifferenz zwischen der Druckund der Unterdruckkammer einstellbar ist, wobei
- die Steuerventilanordnung in Abhängigkeit von einem durch die elektromagnetischen Betätigungseinrichtung (3, 4) fließenden Strom (I)
-- eine Haltestellung, in der der Strom in einem Bereich zwischen einem höheren Wert (I_{AUFBAU}) und einem niedrigeren Wert (I_{ABBAU}) liegt, ohne daß die Steuerventilanordnung die Haltestellung verläßt,
-- eine ersten Druckänderungsstellung, in der der Strom größer als der höhere Wert (I_{AUFBAU}) ist und
-- eine zweiten Druckänderungsstellung, in der der Strom niedriger als der niedrige Wert (I_{ABBAU}) ist, einnimmt,
**dadurch gekennzeichnet, daß**
- eine für den Ist-Druck-Verlauf in der Druckkammer charakteristische Größe erfaßt wird,
- der Ist-Druck-Verlauf auf Vorliegen periodischer Schwingungsanteile eines vorbestimmten Frequenzbandes mit einer vorbestimmten Mindest-Amplitude untersucht wird, und
- bei Vorliegen solcher periodischer Schwingungsanteile des vorbestimmten Frequenzbandes
-- der Strom für die erste Druckänderungsstellung um einen vorhergestimmten Wert (Delta_{AUFBAU}) verringert, und
-- der Strom für die zweite Druckänderungsstellung um einen vorhergestimmten Wert (Delta_{ABBAU}) erhöht wird.

2. Elektronisch steuerbarer Bremskraftverstärker nach Anspruch 1, **dadurch gekennzeichnet, daß**
-- die Verringerung des Stroms für die erste Druckänderungsstellung um einen vorhergestimmten Wert (Delta_{AUFBAU}), und
-- die Erhöhung des Stroms für die zweite Druckänderungsstellung um einen vorhergestimmten Wert (Delta_{ABBAU}) für eine vorbestimmte Zeitdauer vorgenommen wird.

3. Elektronisch steuerbarer Bremskraftverstärker nach Anspruch 1 oder 2, **dadurch gekennzeichnet, daß**
eine vorbestimmte Zeitspanne nach dem Verringern bzw. Erhöhen des Stroms für die erste bzw. zweite Druckänderungsstellung der
der Ist-Druck-Verlauf auf Vorliegen der periodischen Schwingungsanteile des vorbestimmten Frequenzbandes mit der vorbestimmten Mindest-Amplitude untersucht wird, und
- bei Vorliegen solcher periodischer Schwingungsanteile des vorbestimmten Frequenzbandes
-- der für die Verringerung des Stroms für die erste Druckänderungsstellung vorhergestimmte Wert (Delta_{AUFBAU}), und
-- der für die Erhöhung des Stroms für die zweite Druckänderungsstellung vorhergestimmte Wert (Delta_{ABBAU}) jeweils vergrößert wird.

4. Elektronisch steuerbarer Bremskraftverstärker nach Anspruch 1, 2 oder 3, **dadurch gekennzeichnet, daß**
- die Untersuchung des Ist-Druck-Verlaufes auf Vorliegen der periodischen Schwingungsanteile des vorbestimmten Frequenzbandes mit der vorbestimmten Mindest-Amplitude durch Bestimmen der zeitlichen Abstände zwischen charakteristischen Stellen des Ist-Druck-Verlaufes erfolgt.

5. Elektronisch steuerbarer Bremskraftverstärker nach Anspruch 4, **dadurch gekennzeichnet, daß**
- die charakteristischen Stellen des Ist-Druck-Verlaufes Maxima, Minima, Nulldurchgänge, oder Kurvenabschnitte vergleichbarer Steigung sind.

6. Elektronisch steuerbarer Bremskraftverstärker nach Anspruch 5, **dadurch gekennzeichnet, daß**
- die erste Druckänderungsstellung eine Druckaufbaustellung, und
- die zweite Druckänderungsstellung eine Druckabbaustellung ist.

7. Elektronisch steuerbarer Bremskraftverstärker nach Anspruch 1, 2, 3, 4, 5 oder 6, **dadurch gekennzeichnet, daß**
- das vorbestimmte Frequenzband zwischen 0 Hz und 25 Hz, vorzugsweise zwischen 5 Hz und 10 Hz, und besonders vorzugsweise um 7 Hz liegt.

## Claims

1. An electronically controllable brake booster having
- a vacuum chamber and a pressure chamber, which are separated from each other by a movable wall,
- a control valve arrangement (6, 7, 9) which is adapted to be actuated by an electromagnetic actuation means (3, 4), and by means of which a pressure difference between the pressure chamber and the vacuum chamber can be adjusted, with
- the control valve arrangement, as a function of a current (I) flowing through the electromagnetic actuation means (3, 4),
-- assuming a holding position in which the current ranges between a higher value (I_{AUFBAU}) and a lower value (I_{ABBAU}) without the control valve arrangement leaving the holding position,
-- a first pressure changing position in which the current is higher than the higher value (I_{AUFBAU}), and
-- a second pressure changing position in which the current is lower than the low value (I_{ABBAU}),
**characterised in that**
- a value is sensed which is characteristic for the actual pressure characteristic in the pressure chamber,
- the actual pressure characteristic is checked for the existence of periodic oscillation components of a predetermined frequency band with a predetermined minimum amplitude, and
- that upon the existence of such periodic oscillation-components of the predetermined frequency band,
-- the current for the first pressure changing position is decreased by a predetermined value (Delta_{AUFBAU}), and
-- the current for the second pressure changing position is increased by a predetermined value(Delta_{ABBAU}).

2. The electronically controllable brake booster according to Claim 1, **characterised in that**
-- the reduction of the current for the first pressure changing position by a predetermined value (Delta_{AUFBAU}) and
-- the increase of the current for the second pressure changing position by a predetermined value (Delta_{ABBAU}) is carried out for a predetermined time period.

3. The electronically controllable brake booster according to Claim 1 or 2, **characterised in that**
after a predetermined time interval following the decrease or increase, respectively, of the current for the first or second, respectively, pressure changing position,
the actual pressure characteristic is checked for the existence of the periodic oscillation components of the predetermined frequency band with the predetermined minimum amplitude, and
- upon the existence of such periodic oscillation components of the predetermined frequency band,
-- the previously determined value (Delt_{AUFBAU}) for the decrease of the current for the first pressure changing position and
-- the previously determined value (Delta_{ABBAU}) for the increase of the current for the second pressure changing position are both increased.

4. The electronically controllable brake booster according to Claim 1, 2, or 3, **characterised in that**
- the check of the actual pressure characteristic for the existence of the periodic oscillation components of the predetermined frequency band with the predetermined minimum amplitude is carried out by determining the time intervals between characteristic places of the actual pressure characteristic.

5. The electronically controllable brake booster according to Claim 4, **characterised in that**
- the characteristic places of the actual pressure characteristic are maxima, minima, zero crossings, or curve sections with comparable gradients.

6. The electronically controllable brake booster according to Claim 5, **characterised in that**
- the first pressure changing position is a pressure build-up position, and
- the second pressure changing position is a pressure relief position.

7. The electronically controllable brake booster according to Claim 1, 2, 3, 4, 5, or 6, **characterised in that**
- the predetermined frequency band ranges between 0 Hz and 25 Hz, preferably between 5 Hz and 10 Hz, and particularly preferably, ranges about 7 Hz.

## Revendications

1. Amplificateur de la force de freinage, à commande électronique, comportant :
- une chambre en dépression et une chambre en pression, séparées l'une de l'autre par une paroi mobile,
- un dispositif de soupapes de commande (6, 7, 9), qui peut être actionné au moyen d'un dispositif d'actionnement (3, 4) électromagnétique, et par lequel peut être réglée une différence de pression entre la chambre en pression et la chambre en dépression,
-- le dispositif de soupape de commande prenant, en fonction d'un courant (I) traversant le dispositif d'actionnement électromagnétique (3, 4),
- une position de repos, dans laquelle le courant se trouve dans une zone comprise entre une valeur plus élevée (I_{AUFBAU}) et une valeur basse (I_{ABBAU}) sans que le dispositif de soupape de commande quitte la position de repos,
-- une première position de modification de la pression, dans laquelle le courant (I) est plus fort que la valeur la plus élevée (I_{AUFBAU}), et
-- une deuxième position de modification de la pression, dans laquelle le courant (I) est plus bas que la valeur basse (I_{ABBAU}),
**caractérisé en ce que**
- on relève une grandeur caractéristique en tant que valeur réelle de la variation dans le temps de la pression,
- la valeur réelle de la variation dans le temps de la pression est examinée sur la présence de composantes d'oscillation périodiques d'une bande de fréquence prédéfinie et présentant une amplitude minimale prédéterminée, et
- en présence de telles composantes d'oscillation périodiques de la bande de fréquence prédéfinie,
- on réduit d'une certaine valeur prédéterminée (Delta_{AUFBAU}) le courant pour la première position de modification de la pression, et
-- on augmente d'une certaine valeur prédéterminée (Delta_{ABBAU}) le courant pour la deuxième position de modification de la pression.

2. Amplificateur de la force de freinage, à Commande électronique suivant la revendication 1, **caractérisé en ce qu'**on détermine à l'avance, pour une durée prédéterminée,
-- la réduction du courant, d'une valeur prédéterminée (Delta_{AUFBAU}), pour la première position de modification de la pression, et
-- l'augmentation du courant, d'une certaine valeur prédéterminée (Delta_{ABBAU}), pour la deuxième position de modification de la pression

3. Amplificateur de la force de freinage, à commande électronique suivant la revendication 1 ou 2, **caractérisé en ce que**
après un intervalle de temps prédéterminé après respectivement réduction ou augmentation du courant pour respectivement la première ou la deuxième position de modification de la pression,
l'allure de la valeur réelle de la pression est examinée sur la présence des composantes d'oscillation périodiques de la bande de fréquence prédéfinie, comportant l'amplitude minimale prédéterminée, et
- en présence de telles composantes d'oscillation périodiques de la bande de fréquence prédéfinie,
-- on augmente chaque fois la valeur prédéterminée, pour réduire le courant pour la première position de modification de la pression (Delta_{AUFBAU}), et
-- on augmente chaque fois la valeur prédéterminée (Delta_{ABBAU}) du courant pour la deuxième position de modification de la pression.

4. Amplificateur de la force de freinage, à commande électronique suivant la revendication 1, 2 ou 3, **caractérisé en ce que** l'examen de l'allure de la valeur réelle portant sur la présence des composantes d'oscillations périodiques de la bande de fréquence prédéterminée comportant l'amplitude minimale prédéterminée, se fait par détermination des écarts de temps entre des positions caractéristiques de l'allure de la valeur réelle de pression.

5. Amplificateur de la force de freinage, à commande électronique suivant la revendication 4, **caractérisé en ce que** les positions caractéristiques de l'allure de la valeur réelle sont des maxima, des minima, des passages par zéro ou des parties de courbe ayant des pentes comparables.

6. Amplificateur de la force de freinage, à commande électronique suivant la revendication 5, **caractérisé en ce que**
- la première position de modification de la pression est une position de croissance de la pression, et
- la deuxième position de modification de la pression est une position de décroissance de la pression.

7. Amplificateur de la force de freinage, à commande électronique suivant l'une des revendications 1, 2, 3, 4, 5 ou 6, **caractérisé en ce que**
- la bande de fréquence prédéterminée se trouve entre 0 Hz et 25 Hz, de préférence entre 5 Hz et 10 Hz et, en particulier, de préférence à 7 Hz.
